# EUROPEAN PATENT SPECIFICATION

(11) **EP 4 479 666 B1**
(45) Date of publication and mention of the grant of the patent: **05.08.2026**
(21) Application number: 23711193.5
(22) Date of filing: 16.02.2023
(51) Int. Cl.: F16K 1/12, F16K 31/122

(54) **AXIAL VALVE**
AXIALVENTIL
SOUPAPE AXIALE

(30) Priority: 17.02.2022 IT 202200002948
(43) Date of publication of application: 25.12.2024
(73) Proprietor: ORION S.P.A., 73100 Lecce (LE) (IT)
(72) Inventor: RIGHINI, Andrea, 34018 San Dorligo Della Valle-Dolina (TS) (IT)
(74) Representative: Petraz, Davide Luigi
(86) International application number: PCT/IT2023/050048
(87) International publication number: WO 2023/157037

(56) References cited:
- EP-A1- 0 566 543
- EP-A1- 1 207 326
- US-A- 5 826 613
- US-A1- 2004 035 462
- US-A1- 2020 263 798

## Description

### FIELD OF THE INVENTION

The present invention refers to an axial valve particularly suitable for use at high pressures for controlling and regulating a flow of operating fluid flowing inside it in a direction parallel to the direction of movement of a regulation member of the valve itself.

The fluid may be liquid, gaseous or liquid-gaseous biphasic with operating pressures comprised between about 1 bar, i.e. 0.1 MPa, and about 1200 bar, i.e. 120 MPa, and operating temperatures comprised between about -50°C and about +250°C.

This axial valve is suitable both for on-off applications, service or safety type, and for applications for the control of pressure and flow rate of the operating fluid in pipes, conduits, tanks such as, but not only in plants of the process, chemical, oil and gas industry.

### BACKGROUND OF THE INVENTION

It is known the use of an axial valve to control and/or regulate the flow of a fluid in a pipe, a conduit or a tank for example, but not only, for applications in plants of the process, chemical, oil and gas industry. Because of the critical applications for which they are intended, these valves are required to have absolute guarantee of operation when they must be activated or deactivated.

There are numerous axial valves suitable for this type of applications which generally comprise a tubular body which develops mainly along a longitudinal axis and inside which there is defined a passage channel for the operating fluid which flows from an inlet section to an outlet section of the valve itself.

Inside the tubular body there is disposed a fixed interception member, coaxial to the axis of the valve and around which the fluid can freely flow. This interception member is fixed to the internal wall of the tubular body by means of two or more support spokes.

The interception member receives inside thereof a regulation member which is movable, parallel to the longitudinal axis of the valve, between a rest or opening position, in which the regulation member is retracted inside the adjacent part of the valve body or inside the interception member, and a closing position in which the regulation member completely obstructs the passage section of the valve blocking the passage of the fluid.

In some known solutions, the regulation member is actuated by means of an actuator external to the tubular body. In this case, the actuator comprises a mechanism for commanding the regulation member equipped with a transmission towards an axis perpendicular to a longitudinal movement axis of the regulation member, made with a rack, a toothed wheel, crank mechanisms or other. Such solutions are obviously complex, require a large number of components and are potentially prone to failures.

Further known solutions provide for the regulation member to be actuated by means of an actuator disposed in a central position inside the tubular body. The actuator comprises a piston guided in a corresponding cylinder located inside the interception member which is alternatively filled or emptied by a pressurized actuation fluid, pumped through suitable delivery channels formed in the spokes themselves. Having to contain piston and cylinder, the interception member is very bulky, whereby the operating fluid passage section is reduced and the pressure losses are undesirably high. In addition, the interception device must be equipped with pressure seals to divide zones that must operate at different pressures. Also in this case the components are numerous, of complex design, subject to malfunctions and difficult to reach for the execution of any maintenance.

Such components, which can be channels, pipes, lever mechanisms or other, make the construction of the valve complex, increase the risk of malfunctions and increase the pressure losses as they radially cross the fluid flow creating an obstacle.

A further drawback is linked to the installation of the sensor system for controlling the position of the regulation member which is subject to the same connection problems due to the fact that it is necessary to reach the movement of the regulation member centrally, with respect to the flow.

Solutions are also known in which the axial valve has a regulation member conformed like a sliding sleeve, actuated by a pressurized actuation fluid acting on a toroidal chamber peripheral thereto. Examples of such valves are disclosed in documents US 5 826 613 A, EP 0 566 543 A1, US 2004/035462 A1 and US 2020/263798 A1.

These valves, while admitting a balanced operation towards the internal pressure of the controlled fluid, present a drawback that limits their use to large-sized applications, which have flanged connections and which operate at high pressures. In fact, the fluid tightness between the sleeve and the interception member takes place at a different radial height than the fluid tightness between the sleeve and the valve body.

This always causes a differential thrust, on an annular area which can be substantial, being linked to the minimum wall thickness of the sleeve, and consequently considerable longitudinal thrusts are generated. Such thrusts cannot be managed by actuation fluids without resorting to considerable annular sections of the toroidal chamber that make the valve very bulky and therefore not very housable.

There is therefore the need to perfect an axial valve that can overcome at least one of the disadvantages of the state of the art.

To do this, it is necessary to solve both the technical problem of activating or deactivating the axial valve (opening-closing) with the smallest possible number of components, in an effective and reliable manner, and the technical problem of cancelling the longitudinal thrusts acting on the regulation member.

In particular, one purpose of the present invention is to realize an axial valve with a small number of components, which is compact and reliable.

Another purpose of the present invention is to realize such an axial valve with reduced pressure losses when the fluid is free to flow through it.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes and to resolve the technical problems disclosed above in a new and original way, also achieving considerable advantages compared to the state of art, an axial valve according to the present invention has been devised, particularly suitable for applications for the control of pressure and flow rate of an operating fluid in pipes, conduits, tanks typically, but not only, in plants of the process, chemical, oil and gas industry.

Said axial valve is advantageously optimized as to the minimum number of required construction components, can be scaled on nominal sizes from DN25 to DN2000, and is not affected by the thrusts generated by the possible operating pressures, which vary from about 0.1 MPa to about 120 MPa depending on the pressure defined by the requirement of the application case of use.

The axial valve of the present invention comprises:
- a tubular body having a prevalent development along a longitudinal axis and provided with a passage channel for an operating fluid;
- an interception member disposed inside said passage channel and coaxial to said longitudinal axis;
- an annular regulation member disposed inside said passage channel downstream of said interception member and axially sliding toward/away from said interception member between a closing position and an opening position.

Said axial valve further comprises peripheral actuation means disposed between said regulation member and said tubular body, and configured to determine a movement of said regulation member between said closing position and said opening position, wherein in said closing position, said regulation member and said interception member are coupled in a fluid-tight manner.

In accordance with the present invention, said regulation member has a cylindrical annular wall having a constant external diameter, and said axial valve comprises annular sealing means configured to exert a sealing action on said regulation member both with respect to said valve body and with respect to said interception member at a same radial height corresponding to said external diameter.

Consequently, the regulation member, due to shape and geometry, and due to the specific positioning of said sealing means is not subject to longitudinal thrusts caused by the process fluid. The pressure of the process fluid therefore acts on the regulation member only in a radial and isostatic direction, the longitudinal thrusts on the regulation member being advantageously cancelled.

In accordance with the present invention, said annular sealing means consist of lip seals. Said lip seals are made of thermoplastic polymers preenergized by an internal elastic body, such as a spring, and subsequently self-energized by the pressure of the system to which they are applied. Said annular sealing means, due to their characteristic operating principle as described above, are configured to ensure constant and limited static and dynamic frictions during the movement of said regulation member regardless of the pressure of said operating fluid.

In accordance with another aspect of the present invention, said peripheral actuation means comprise a circumferential actuation chamber with toroidal shape delimited radially by a wall of said tubular body having its own internal diameter and by an annular wall of said regulation member having its own external diameter, and axially by two of said annular sealing means. Said internal diameter is advantageously at most 1.2 times said external diameter.

The actuation chamber is particularly compact precisely because the longitudinal thrusts are cancelled thanks to the innovative arrangement of the sealing means. This also makes it possible to minimize the actuation thrusts at the same operating pressures of the valve, which thrusts only have to overcome the frictions generated by the sliding contact between the regulation member and the sealing means. The latter advantageously present contact parts made with a finish and precision such as to ensure the aforementioned frictions.

In accordance with another aspect of the present invention, said peripheral actuation means comprise a circumferential septum that divides said actuation chamber into two distinct and separate compartments, and at least one first actuation channel made through said tubular body and configured to put at least one of said compartments in fluidic communication with an actuation device of said axial valve. Said septum advantageously forms part of said regulation member.

In accordance with another aspect of the present invention, said actuation device is of the oleodynamic type and is configured to convey inside said actuation chamber an actuation fluid with a nominal pressure comprised between 10 MPa and about 23 MPa.

In accordance with a further aspect of the present invention, said regulation member is circumferentially provided with an annular portion projecting radially from said annular wall of said regulation member towards said tubular body acting as a septum for dividing said actuation chamber into said two compartments.

In accordance with another aspect of the present invention, said peripheral actuation means also comprise a second actuation channel which is configured to put the other of said compartments in fluidic communication with said actuation device.

In accordance with a further aspect of the present invention, said peripheral actuation means may also comprise an elastic element disposed in either of said compartments and configured to generate an axial thrust on said regulation member to move it in the opening or closing position. Said axial thrust is equal at most to 50N per mm of passage diameter.

In accordance with another aspect of the present invention, said interception member comprises a central body coaxial to said longitudinal axis and having a second end facing toward said regulation member which centrally comprises a closing portion conformed in a mating manner to a secondary channel of said regulation member. In particular when said regulation member is in the closing position said central body is disposed at least partially inside said secondary channel.

In accordance with a further aspect of the present invention, said second end of the interception member also comprises a circumferential seating which develops around said closing portion and in which there is installed one of said sealing means, wherein said circumferential seating is conformed to receive a coupling end of said regulation member. Said circumferential seating develops at a same radial height corresponding to the external diameter of the cylindrical annular wall of said regulation member.

In accordance with another aspect of the present invention, said axial valve comprises at least one detection device communicating with said actuation chamber and configured to directly determine the axial position of said regulation member.

### DESCRIPTION OF THE DRAWINGS

These and other aspects, characteristics and advantages of the present invention will become apparent from the following description of some embodiments, given as a non-restrictive example with reference to the attached drawings wherein:
- Fig. 1 is a longitudinal section of a "double acting" axial valve, according to the present invention, in which the regulation member is in the opening position;
- Fig. 2 is a longitudinal section of the axial valve of Fig. 1 in which the regulation member is in the closing position;
- Figs. 3-4 are embodiment variants of the axial valve of Figs. 1-2 wherein the axial valve is "single acting";
- Fig. 5 is an embodiment variant of Fig. 1 in which there are possible devices for detecting the position of the regulation member;
- Fig. 6 is an embodiment variant of Fig. 1 in which the tubular body is made as a single piece.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

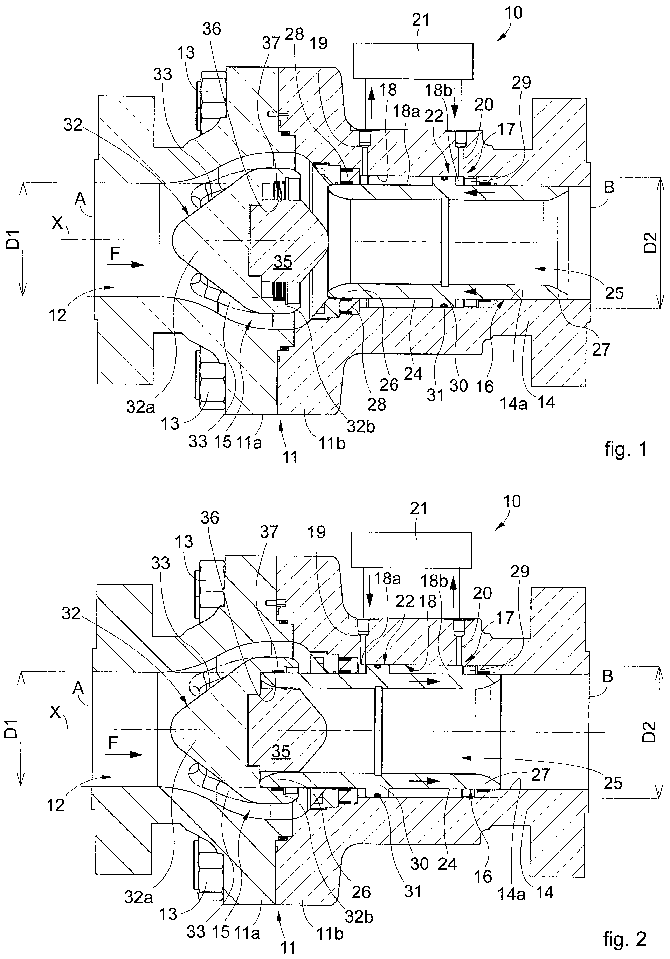

With reference to Figure 1, an axial valve 10 according to the present invention is intended to control and/or regulate the flow, or flow rate, of an operating fluid which can be liquid, gaseous or liquid-gaseous biphasic flowing with a nominal pressure which can be comprised between about 1 bar, or 0.1 MPa, and about 1200 bar, or 120 MPa.

The axial valve 10 comprises a tubular body 11 having a prevalent development along a longitudinal axis X and provided internally with a passage channel 12 for the operating fluid.

The tubular body 11 develops between an inlet section A and an outlet section B of the axial valve 10. The operating fluid can flow along a preferential flowing direction (indicated with an arrow F in the attached figures) which is overall parallel to the longitudinal axis X, from the inlet section A to the outlet section B.

Such inlet A and outlet B sections may be configured for the connection with a pipe, duct, discharge or loading channel, or other connection. The inlet section A and the outlet section B can have a nominal diameter comprised between about 50 mm and about 2000 mm, i.e. in line with the dictates of the industry regulations, wherein ASME B16.34 or API 6D is worth mentioning.

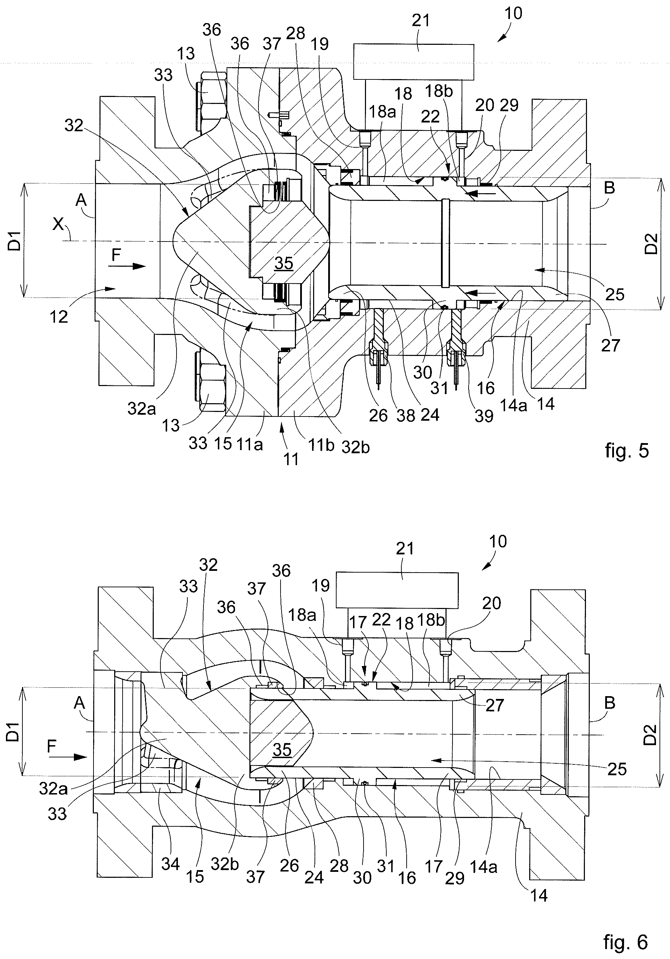

The tubular body 11 can comprise two parts 11a, 11b which are mutually connected through bolted joints 13 (Figs. 1-4) or it can be a single piece (Fig. 6) obtained by casting or forged piece, depending on the materials involved, the design requirements and the construction convenience.

The tubular body 11 is provided with a wall 14, or mantle, which internally defines the passage channel 12. In other words, the wall 14 has an internal surface 14a which by developing around the longitudinal axis defines the passage channel 12.

The axial valve 10 comprises, along the passage channel 12, an interception member 15 coaxial to the longitudinal axis X and an annular regulation member 16, also coaxial to the longitudinal axis X, and disposed downstream of the interception member 15 with respect to the preferential flowing direction F of the operating fluid. In other words, starting from the inlet section A, it can be found first the interception member 15 and then the regulation member 16.

The interception member 15 is integral with the cylindrical body 11 while the regulation member 16 is movable and is configured to cooperate with the interception member 15 to regulate the flow rate of the operating fluid.

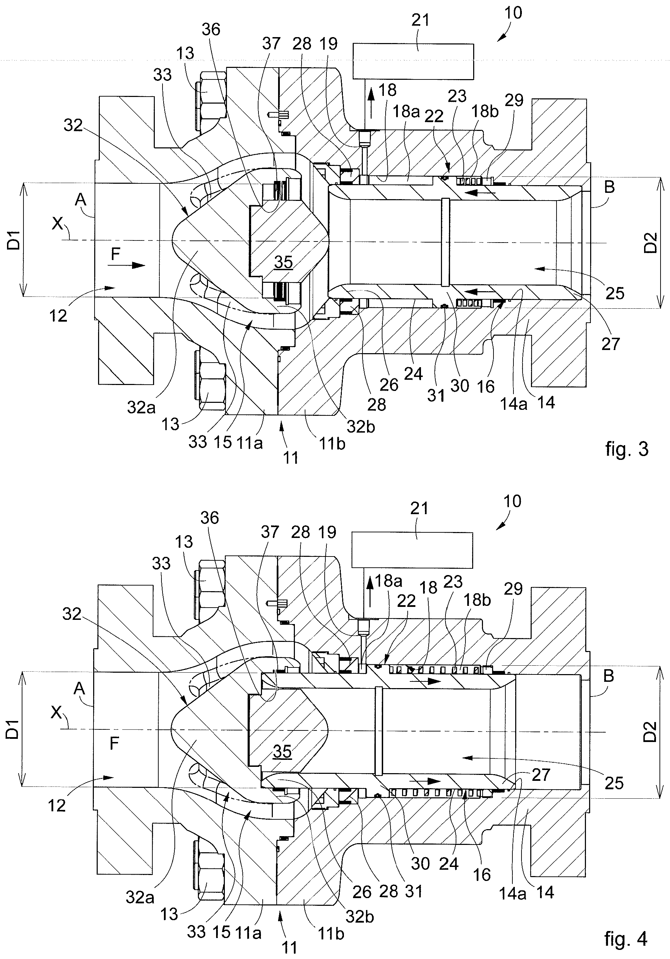

The regulation member 16 is axially sliding along the passage channel 12 toward/away from the interception member 15 between an opening position (Figs. 1, 3) and a closing position (Figs. 2, 4). In the opening position the passage of the operating fluid from the inlet section A to the outlet section B of the axial valve 10 is allowed. In the closing position the regulation member 16 and the interception member 15 are coupled in a fluid-tight manner, i.e. watertight, gas-tight or both, whereby the operating fluid is confined between the inlet section A and the interception member 15.

According to one aspect, the axial valve 10 comprises peripheral actuation means 17 disposed between the regulation member 16 and the tubular body 11 and configured to determine a movement of the regulation member 16 between the closing position and the opening position.

The presence of the peripheral actuation means 17 makes it possible to simplify the construction of the axial valve 10 since the movement of the regulation member 16 does not take place through components that must transmit the motion directly along the longitudinal axis X, which is difficult to reach if it is necessary to cross the passage line of the operating fluid.

The peripheral actuation means 17 are of the oleodynamic, hydraulic or pneumatic type.

The peripheral actuation means 17 comprise an actuation chamber 18 formed between the regulation member 16 and the tubular body 11 which is configured to receive and contain an actuation fluid O. The actuation chamber 18 containing the actuation fluid O is completely isolated from the passage channel 12 where the operating fluid flows.

The peripheral actuation means 17 also comprise at least one actuation channel 19 made through the tubular body 11, preferably along a radial direction, and configured to allow the fluidic communication between the actuation chamber 18 and the outside of the tubular body 11, in particular to allow the fluidic connection between the actuation chamber 18 and an actuation device 21 of the axial valve 10 which may be hydraulic, oleodynamic or pneumatic.

The actuation fluid O is peripherally confined and can be easily controlled from the outside with direct access via the at least one actuation channel 19. Furthermore, there are no intermediate actuation components so that the construction of the axial valve 10 is extremely simplified.

In a preferred embodiment, the actuation device 21 is of the oleodynamic type and is configured to convey inside the actuation chamber 18 and to the outside thereof the actuation fluid O, in this case hydraulic oil, with a nominal pressure comprised between about 10 MPa and about 23 MPa.

The peripheral actuation means 17 also comprise a septum 22 which divides the actuation chamber 18 into two compartments 18a, 18b, in particular a first compartment 18a and a second compartment 18b which are distinct and separate. More in detail, the first compartment 18a and the second compartment 18b are fluidically independent, i.e. they are not communicating with each other. The first compartment 18a is the one closest to the interception member 15 while the second compartment 18b is the one closest to the outlet section B.

With reference to the example of Figures 1-2, the axial valve 10 is so-called "double-acting", whereby in the tubular body 11 both a first actuation channel 19 fluidically communicating with the first compartment 18a and a second actuation channel 20 fluidically communicating with the second compartment 18b are obtained.

When the regulation member 16 is in the opening position (Fig. 1) and the axial valve 10 must be closed, the actuation fluid O is pumped into the second compartment 18b while at the same time the actuation fluid O present in the first compartment 18a is extracted and sent to a recovery tank of the actuation device 21. This operation generates an axial hydraulic thrust that makes the regulation member 16 slide towards the interception member 15 until a fluid-tight coupling is achieved.

Conversely, when the regulation member 16 is in the closing position (Fig. 2) and the axial valve 10 must be opened, the actuation fluid O present in the second compartment 18b is extracted while at the same time the actuation fluid O is pumped into the first compartment 18a. This operation generates an axial hydraulic thrust which makes the regulation member 16 slide away from the interception member 15 towards the outlet section B.

With reference to the example of Figures 3-4, the axial valve 10 is so-called "single-acting", whereby in the tubular body 11 a single first actuation channel 19 fluidically communicating with the first compartment 18a is obtained while in the second compartment 18b there is disposed an elastic element 23 configured to generate an axial counter-thrust on the regulation member 16 to bring it back into the closing position.

When the regulation member 16 is in the closing position (Fig. 4) and the axial valve 10 must be opened, the actuation fluid O is pumped into the first compartment 18a while at the same time the elastic element 23 undergoes an axial compression. When the axial valve 10 must be closed, the actuation fluid O is extracted from the first compartment 18a and the elastic element 23 generates the axial counter-thrust on the regulation member 16 to bring it back into the closing position.

The elastic element 23 may be a helical, cup, leaf spring, or other.

According to an embodiment variant, there may be a single second actuation channel 20 fluidically communicating with the second compartment 18b while the elastic element 23 is disposed in the first compartment 18a, or vice versa. The operation of the axial valve 10 takes place in the opposite way to what has been described in the previous case.

The elastic element 23 is configured to provide axial thrusts equal at most to 50N per mm of passage diameter.

The regulation member 16 is a hollow cylinder or, in other words, a sleeve. Thus, the regulation member 16 has an annular cylindrical wall 24 which internally defines a secondary channel 25 coaxial to the passage channel 12 of the tubular body 11.

Said annular wall 24 has a coupling end 26, closer to the interception member 15 and configured to cooperate with the latter to achieve the fluid-tight coupling, and an opposed outlet end 27, closer to the outlet section B.

Said annular wall 24 and the wall 14 of the tubular body 11, in particular its internal surface 14a, are suitably shaped to form the actuation chamber 18 between them.

In particular, the wall 14 of the tubular body 11 has a circumferential recess which develops between two axial ends thereof parallel to the longitudinal axis X.

The actuation chamber 18 therefore has a substantially toroidal shape and is circumferentially delimited by the wall 14 of the tubular body 11, which in that stretch has an internal diameter D2, and by the annular wall 24 of the regulation member 16 having an external diameter D1, and axially by annular sealing means which in this case are two annular sealing elements 28, 29 disposed at the axial ends of the circumferential recess.

The two annular sealing elements 28, 29 are mounted circumferentially between the tubular body 11 and the regulation member 16 and can possibly act as an abutment, or end-of-stroke, for the regulation member 16 in the opening position and/or in the closing position. According to an embodiment variant, the circumferential recess could be obtained directly in the annular wall 24 of the regulation member 16 while the wall 14 of the tubular body 11 may have an unshaped cylindrical profile.

The regulation member 16 is circumferentially provided with an annular portion 30 which acts as a septum 22 to divide the actuation chamber 18 into the aforementioned two compartments 18a, 18b. The annular portion 30 is disposed in contact with the internal wall 14 of the tubular body 11, relatively to the section corresponding to the actuation chamber 18, and be provided with a sealing ring 31 to prevent the actuation fluid O from being able to pass from the first compartment 18a to the second compartment 18b and vice versa.

According to an embodiment variant, in the case where the circumferential recess is obtained in the annular wall 24 of the regulation member 16, a similar annular portion might project, for the same purposes, from the wall 14 of the tubular body 11.

The annular sealing elements 28, 29 are configured to act on the regulation member 16, in particular on an external surface 24a of the annular wall 24, at the same radial height. Said radial dimension corresponds to the external diameter D1 of the annular wall 24, i.e. of the external surface 24a.

In other words, the external surface 24a is characterized by a single constant external diameter D1, with the exception of the annular portion 30 having a larger diameter, which coincides with an internal diameter of the annular sealing elements 28, 29 at which the sliding contact with the regulation member 16 takes place.

The interception device 15 comprises a central body 32 coaxial to the longitudinal axis X and at least one radial connection element 33 for connection to the wall 14 of the tubular body 11.

In the case of a tubular body 11 made up with two parts, the central body 32 and the at least one radial connection element 33 can be made integrally with a first part 11a of the tubular body 11.

In the case of a tubular body 11 made as one piece, the interception member 15 can be provided with a connection ring 34 (Fig. 6) to which the at least one radial connection element 32 is fixed. Said ring 34 is configured to be accommodated in a mating circumferential seating provided in the wall 14 of the tubular body 11.

The interception member 15 is conformed in such a way that the incoming operating fluid can lap it externally and then continue towards the outlet section B. In other words, between the interception member 15 and the wall 14 of the tubular body 11 there is a gap where the operating fluid is free to pass.

The central body 32 comprises a first end 32a facing toward the inlet section A and having a tapered shape to reduce as much as possible the friction with the incoming fluid, and an opposed second end 32b facing toward the regulation member 16 and configured to cooperate with the latter in order to achieve therewith the desired fluid-tight coupling, when the regulation member 16 is in the closing position. The second end 32b centrally comprises a closing portion 35 conformed to couple to the secondary channel 25 of the regulation member 16.

In the examples of Figures 1-4, the second end 32b also comprises a circumferential seating 36 which develops around the closing portion 35 and is conformed to receive the coupling end 26 of the annular wall 24 of the regulation member 16. In the circumferential seating 36 there might be installed another sealing means, which in this case is a sealing ring 37, to prevent the operating fluid from being able to leak when the regulation member 16 is in the closing position.

The sealing ring 37 is also configured to act on the regulation member 16, in particular on the external surface 24a of the annular wall 24, at the same radial height as the annular sealing elements 28, 29, i.e. at the external diameter D1.

The synergistic combination of the shape and geometry of the regulation member 16, in this case the diameter of the external surface 24a, and the specific positioning of the seals 28, 29, 37 acting at the same radial height, i.e. at a common radial height, allows the regulation member 16 not to undergo longitudinal thrusts caused by the pressure of the operating fluid. The pressure of the operating fluid rather acts only in a radial and isostatic direction, minimizing the forces necessary for the movement of the regulation member 16, so that for example the actuation device can be chosen at a lower power.

The axial valve 10 can comprise at least one detection device 38, 39 communicating with the actuation chamber 18 and configured to directly determine the axial position of the regulation member 16. For example, the detection device 38 can detect the closure of the valve 10 while the detection device 39 can detect the opening of the valve 10.

It is clear that modifications and/or additions of parts may be made to the axial valve 10 described heretofore, without departing from the scope of the present invention, as defined by the claims.

According to an embodiment variant of the axial valve 10, the regulation member 16 can be disposed upstream of the interception member 15 which can be installed contrary to the previously described embodiments.

It is also clear that, although the present invention has been described with reference to some specific examples, a person of skill in the art shall certainly be able to achieve other equivalent forms of an axial valve 10, having the features as set forth in the claims and hence all coming within the field of the protection defined thereby. In the following claims, the sole purpose of the references in brackets is to facilitate their reading and they must not be considered as restrictive factors with regard to the field of protection defined by the claims.

## Claims

1. Axial valve (10) comprising a tubular body (11) having a prevalent development along a longitudinal axis (X) and provided with a passage channel (12) for an operating fluid in which there are disposed both an interception member (15) coaxial to said longitudinal axis (X) and also an annular regulation member (16) disposed downstream of said interception member (15) with respect to a flowing direction (F) of the fluid and axially sliding toward/away from said interception member (15) between a closing position and an opening position, said axial valve (10) further comprises peripheral actuation means (17) disposed between said regulation member (16) and said tubular body (11) which are able to determine a movement of said regulation member (16) between said closing and opening positions, wherein in said closing position said members (16, 15) are coupled in a fluid-tight manner, wherein said regulation member (16) has a cylindrical annular wall (24) having a constant external diameter (D1), wherein said axial valve (10) comprises annular sealing means (28, 29, 37) consisting of lip seals and configured to exert a sealing action on said regulation member (16) with respect to said valve body (11) at a same radial height corresponding to said external diameter (D1), wherein said interception member (15) comprises a central body (32) coaxial to said longitudinal axis (X) and having a second end (32b) facing toward said regulation member (16) centrally comprising a closing portion (35) conformed in a mating manner to a secondary channel (25) of said regulation member (16), said second end (32b) further comprising a circumferential seating (36) which develops around said closing portion (35) at a same radial height corresponding to said external diameter (D1) wherein said circumferential seating (36) is conformed to receive a coupling end (26) of said regulation member (16), **characterised in that** one of said sealing means (37) is installed in the circumferential seating (36) for exerting a sealing action on said regulation member (16) with respect to said interception member (15) at a same radial height corresponding to said external diameter (D1).

2. Axial valve (10) as in claim 1, **characterized in that** said annular sealing means (28, 29, 37) are configured to ensure constant and limited static and dynamic frictions during the movement of said regulation member (16) regardless of the pressure of said operating fluid.

3. Axial valve (10) as in any claim hereinbefore, **characterized in that** said peripheral actuation means (17) comprise a circumferential actuation chamber (18) with toroidal shape delimited radially by a wall (14) of said tubular body (11) having an internal diameter (D2) and by said annular wall (24) of said regulation member (16) having said external diameter (D1), and axially by two of said annular sealing means (28, 29), wherein said internal diameter (D2) is at most 1.2 times said external diameter (D1).

4. Axial valve (10) as in claim 3, **characterized in that** said peripheral actuation means (17) comprise a circumferential septum (22, 30) which is part of said regulation member (16) and divides said actuation chamber (18) into two distinct and separate compartments (18a, 18b), and at least one actuation channel (19, 20) made through said tubular body (11) and configured to put at least one of said compartments (18a, 18b) in fluidic communication with an actuation device (21).

5. Axial valve (10) as in claim 4, **characterized in that** said actuation device (21) is of the oleodynamic type and is configured to convey inside said actuation chamber (18) an actuation fluid (O) with a nominal pressure comprised between 10 MPa and about 23 MPa.

6. Axial valve (10) as in claim 4 or 5, **characterized in that** said peripheral actuation means (17) also comprise an elastic element (23) disposed in either of said compartments (18a, 18b) and configured to generate an axial thrust equal at most to 50N per mm of passage diameter on said regulation member (16) to move it in the opening or closing position.

7. Axial valve (10) as in any claim from 3 to 6, **characterized in that** it comprises at least one detection device (38, 39) communicating with said actuation chamber (18) and configured to directly determine the axial position of said regulation member (16).

8. Axial valve (10) as in any claim hereinbefore, **characterized in that** in said closing position of said regulation member (16) said central body (32) is disposed at least partially inside said secondary channel (25).

9. Axial valve (10) as in any claim hereinbefore, **characterized in that** two annular sealing elements (28, 29) are mounted circumferentially between said tubular body (11) and said regulation member (16).

10. Axial valve (10) as in claim 9, **characterized in that** said sealing means (37) is a sealing ring (37) configured to act on an external surface (24a) of the annular wall (24) of the regulation member (16) at the same radial height as the annular sealing elements (28, 29) corresponding to said external diameter (D1).

## Patentansprüche

1. Axialventil (10), umfassend einen rohrförmigen Körper (11), der sich im Wesentlichen entlang einer Längsachse (X) erstreckt und der mit einem Durchgangskanal (12) für ein Betriebsfluid versehen ist, in dem sowohl ein zu der Längsachse (X) koaxiales Absperrelement (15) als auch ein ringförmiges Regelelement (16) angeordnet sind, das - in Bezug auf eine Fließrichtung (F) des Fluids - stromabwärts des Absperrelements (15) liegt und axial zu dem Absperrelement (15) hin bzw. von diesem weg zwischen einer Schließstellung und einer Öffnungsstellung verschiebbar ist, wobei das Axialventil (10) ferner periphere Betätigungsmittel (17) umfasst, die zwischen dem Regelelement (16) und dem rohrförmigen Körper (11) angeordnet und in der Lage sind, eine Bewegung des Regelelements (16) zwischen der Schließ- und der Öffnungsstellung zu bewirken, wobei in der Schließstellung die Elemente (16, 15) fluiddicht miteinander verbunden sind, wobei das Regelelement (16) eine zylindrische ringförmige Wand (24) mit einem konstanten Außendurchmesser (D1) aufweist, wobei das Axialventil (10) ringförmige Dichtungsmittel (28, 29, 37) umfasst, die aus Lippendichtungen bestehen und so ausgelegt sind, dass sie auf das Regelelement (16) in Bezug auf den Ventilkörper (11) auf derselben radialen Höhe, entsprechend dem Außendurchmesser (D1), eine Dichtwirkung ausüben, wobei das Absperrelement (15) einen zentralen Körper (32) umfasst, der koaxial zur Längsachse (X) liegt und der ein zweites Ende (32b) aufweist, das dem Regelelement (16) gegenübersteht und in der Mitte einen Schließabschnitt (35) umfasst, der passgenau an einen Nebenkanal (25) des Regelelements (16) angepasst ist, wobei das zweite Ende (32b) zudem eine umlaufende Aufnahme (36) aufweist, die sich um den Schließabschnitt (35) herum auf derselben radialen Höhe, entsprechend dem Außendurchmesser (D1), erstreckt, wobei die umlaufende Aufnahme (36) so ausgelegt ist, dass sie ein Kupplungsende (26) des Regelelements (16) aufnimmt,
**dadurch gekennzeichnet, dass** eines der Dichtungsmittel (37) in der umlaufenden Aufnahme (36) angeordnet ist, um eine Dichtwirkung auf das Regelelement (16) gegenüber dem Absperrelement (15) in derselben radialen Höhe, entsprechend dem Außendurchmesser (D1), auszuüben.

2. Axialventil (10) nach Anspruch 1, **dadurch gekennzeichnet, dass** die ringförmigen Dichtungsmittel (28, 29, 37) so ausgelegt sind, dass sie während der Bewegung des Regelelements (16) unabhängig vom Druck des Betriebsfluids konstante und begrenzte statische und dynamische Reibungen gewährleisten.

3. Axialventil (10) nach irgendeinem der vorstehenden Ansprüche, **dadurch gekennzeichnet, dass** die peripheren Betätigungsmittel (17) eine ringförmige Betätigungskammer (18) mit Toroidform umfassen, die radial durch eine Wand (14) des rohrförmigen Körpers (11) mit einem Innendurchmesser (D2) und durch die ringförmige Wand (24) des Regelelements (16) mit dem Außendurchmesser (D1) sowie axial durch zwei der ringförmigen Dichtungsmittel (28, 29) begrenzt ist, wobei der Innendurchmesser (D2) höchstens das 1.2-fache des Außendurchmessers (D1) beträgt.

4. Axialventil (10) nach Anspruch 3, **dadurch gekennzeichnet, dass** die peripheren Betätigungsmittel (17) eine umlaufende Trennwand (22, 30), die Teil des Regelelements (16) ist und die Betätigungskammer (18) in zwei unterschiedliche und voneinander getrennte Kammern (18a, 18b) unterteilt, sowie mindestens einen Betätigungskanal (19, 20), der durch den rohrförmigen Körper (11) hindurchgeführt und so ausgelegt ist, dass er mindestens eine der Kammern (18a, 18b) in Fluidverbindung mit einer Betätigungsvorrichtung (21) bringt, umfassen.

5. Axialventil (10) nach Anspruch 4, **dadurch gekennzeichnet, dass** die Betätigungsvorrichtung (21) vom oleodynamischen Typ ist und so ausgelegt ist, dass sie innerhalb der Betätigungskammer (18) ein Betätigungsfluid (O) mit einem Nenndruck zwischen 10 MPa und etwa 23 MPa fördert.

6. Axialventil (10) nach Anspruch 4 oder 5, **dadurch gekennzeichnet, dass** die peripheren Betätigungsmittel (17) außerdem ein elastisches Element (23) umfassen, das in einer der beiden Kammern (18a, 18b) angeordnet und so ausgelegt ist, dass es einen axialen Schub erzeugt, der höchstens 50N pro mm Durchlassdurchmesser auf das Regelelement (16) wirkt, um dieses in die Öffnungs- oder Schließstellung zu bewegen.

7. Axialventil (10) nach irgendeinem der Ansprüche 3 bis 6, **dadurch gekennzeichnet, dass** es mindestens eine Erfassungsvorrichtung (38, 39) umfasst, die mit der Betätigungskammer (18) kommuniziert und so ausgelegt ist, dass sie die axiale Position des Regelelements (16) direkt ermittelt.

8. Axialventil (10) nach irgendeinem der vorstehenden Ansprüche, **dadurch gekennzeichnet, dass** in der Schließstellung des Regelelements (16) der zentrale Körper (32) zumindest teilweise innerhalb des Nebenkanals (25) angeordnet ist.

9. Axialventil (10) nach irgendeinem der vorstehenden Ansprüche, **dadurch gekennzeichnet, dass** zwei ringförmige Dichtungselemente (28, 29) umlaufend zwischen dem rohrförmigen Körper (11) und dem Regelelement (16) montiert sind.

10. Axialventil (10) nach Anspruch 9, **dadurch gekennzeichnet, dass** das Dichtungsmittel (37) ein Dichtungsring (37) ist, der so ausgelegt ist, dass er auf eine Außenfläche (24a) der ringförmigen Wand (24) des Regelelements (16) auf derselben radialen Höhe wie die ringförmigen Dichtungselemente (28, 29), entsprechend dem Außendurchmesser (D1), wirkt.

## Revendications

1. Vanne axiale (10) comprenant un corps tubulaire (11) ayant un développement prévalent le long d'un axe longitudinal (X) et pourvu d'un canal de passage (12) pour un fluide de service dans lequel sont disposés à la fois un organe d'interception (15) coaxial audit axe longitudinal (X) ainsi qu'un organe annulaire de régulation (16) disposé en aval dudit organe d'interception (15) par rapport à une direction d'écoulement (F) du fluide et coulissant axialement vers/loin dudit organe d'interception (15) entre une position de fermeture et une position d'ouverture, ladite vanne axiale (10) comprenant en outre des moyens périphériques d'actionnement (17) disposés entre ledit organe de régulation (16) et ledit corps tubulaire (11) qui sont aptes à déterminer un mouvement dudit organe de régulation (16) entre lesdites positions de fermeture et d'ouverture, lequel dans ladite position de fermeture lesdits organes (16, 15) sont accouplés de manière étanche au fluide, lequel ledit organe de régulation (16) présente une paroi annulaire cylindrique (24) ayant un diamètre externe constant (D1), dans lequel ladite vanne axiale (10) comprend des moyens annulaires d'étanchéité (28, 29, 37) constitués de joints à lèvre et configurés pour exercer une action d'étanchéité sur ledit organe de régulation (16) par rapport audit corps de vanne (11) à une même hauteur radiale correspondant audit diamètre externe (D1), lequel ledit organe d'interception (15) comprend un corps central (32) coaxial audit axe longitudinal (X) et ayant une seconde extrémité (32b) faisant face audit organe de régulation (16) comprenant centralement une portion de fermeture (35) conformée de manière complémentaire à un canal secondaire (25) dudit organe de régulation (16), ladite seconde extrémité (32b) comprenant en outre un logement circonférentiel (36) qui se développe autour de ladite portion de fermeture (35) à une même hauteur radiale correspondant audit diamètre externe (D1) lequel ledit logement circonférentiel (36) est conformé pour recevoir une extrémité d'accouplement (26) dudit organe de régulation (16), **caractérisé en ce que** l'un desdits moyens d'étanchéité (37) est installé dans le logement circonférentiel (36), pour exercer une action d'étanchéité sur ledit organe de régulation (16) par rapport audit organe d'interception (15) à une même hauteur radiale correspondant audit diamètre externe (D1).

2. Vanne axiale (10) selon la revendication 1, **caractérisée en ce que** lesdits moyens annulaires d'étanchéité (28, 29, 37) sont configurés pour assurer des frottements statique et dynamique constants et limités lors du mouvement dudit organe de régulation (16) indépendamment de la pression dudit fluide de service.

3. Vanne axiale (10) selon l'une quelconque des revendications précédentes, **caractérisée en ce que** lesdits moyens périphériques d'actionnement (17) comprennent une chambre d'actionnement circonférentielle (18) de forme toroïdale délimitée radialement par une paroi (14) dudit corps tubulaire (11) ayant un diamètre interne (D2) et par ladite paroi annulaire (24) dudit organe de régulation (16) ayant ledit diamètre externe (D1), et axialement par deux desdits moyens annulaires d'étanchéité (28, 29), lequel ledit diamètre interne (D2) est au plus égal à 1.2 fois ledit diamètre externe (D1).

4. Vanne axiale (10) selon la revendication 3, **caractérisée en ce que** lesdits moyens périphériques d'actionnement (17) comprennent une cloison circonférentielle (22, 30) qui fait partie dudit organe de régulation (16) et divise ladite chambre d'actionnement (18) en deux compartiments distincts et séparés (18a, 18b), et au moins un canal d'actionnement (19, 20) réalisé à travers ledit corps tubulaire (11) et configuré pour mettre au moins l'un desdits compartiments (18a, 18b) en communication fluidique avec un dispositif d'actionnement (21).

5. Vanne axiale (10) selon la revendication 4, **caractérisée en ce que** ledit dispositif d'actionnement (21) est du type oléodynamique et est configuré pour acheminer à l'intérieur de ladite chambre d'actionnement (18) un fluide d'actionnement (O) avec une pression nominale comprise entre 10 MPa et environ 23 MPa.

6. Vanne axiale (10) selon la revendication 4 ou 5, **caractérisée en ce que** lesdits moyens périphériques d'actionnement (17) comprennent également un élément élastique (23) disposé dans l'un ou l'autre desdits compartiments (18a, 18b) et configuré pour générer une poussée axiale au plus égale à 50N par mm de diamètre de passage sur ledit organe de régulation (16) pour le déplacer en position d'ouverture ou de fermeture.

7. Vanne axiale (10) selon l'une quelconque des revendications 3 à 6, **caractérisée en ce qu'**elle comprend au moins un dispositif de détection (38, 39) communiquant avec ladite chambre d'actionnement (18) et configuré pour déterminer directement la position axiale dudit organe de régulation (16).

8. Vanne axiale (10) selon l'une quelconque des revendications précédentes, **caractérisée en ce que** dans ladite position de fermeture dudit organe de régulation (16) ledit corps central (32) est disposé au moins partiellement à l'intérieur dudit canal secondaire (25).

9. Vanne axiale (10) selon l'une quelconque des revendications précédentes, **caractérisée en ce que** deux éléments annulaires d'étanchéité (28, 29) sont montés de manière circonférentielle entre ledit corps tubulaire (11) et ledit organe de régulation (16).

10. Vanne axiale (10) selon la revendication 9, **caractérisée en ce que** ledit moyen d'étanchéité (37) est une bague d'étanchéité (37) configurée pour agir sur une surface externe (24a) de la paroi annulaire (24) de l'organe de régulation (16) à la même hauteur radiale que les éléments annulaires d'étanchéité (28, 29) correspondant audit diamètre externe (D1).
